# EUROPEAN PATENT SPECIFICATION

(11) **EP 4 152 810 B1**
(45) Date of publication and mention of the grant of the patent: **26.08.2026**
(21) Application number: 21803931.1
(22) Date of filing: 12.05.2021
(51) Int. Cl.: H04W 28/06, H04L 1/00

(54) **ENCODING METHOD AND APPARATUS, DEVICE AND STORAGE MEDIUM**
CODIERUNGSVERFAHREN UND -VORRICHTUNG, VORRICHTUNG UND SPEICHERMEDIUM
PROCÉDÉ ET APPAREIL DE CODAGE, DISPOSITIF ET SUPPORT DE STOCKAGE

(30) Priority: 13.05.2020 CN 202010404224
(43) Date of publication of application: 22.03.2023
(73) Proprietor: Sanechips Technology Co., Ltd., Shenzhen, Guangdong 518055 (CN)
(72) Inventor: ZHANG, Yi, Shenzhen, Guangdong 518057 (CN)
(74) Representative: Cristinelli, Luca
(86) International application number: PCT/CN2021/093410
(87) International publication number: WO 2021/228156

(56) References cited:
- EP-A1- 1 986 455
- EP-A1- 3 484 113
- WO-A1-2018/175477
- WO-A1-2019/194635
- CN-A- 106 993 332
- CN-A- 110 035 531
- US-A1- 2019 268 969
- ZTE: "Remaining issues on PUSCH enhancements for NR URLLC", 3GPP DRAFT; R1-2001613, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20200420 - 20200424, 11 April 2020 (2020-04-11), Mobile Competence Centre ; 650, route des Lucioles ; F-06921 Sophia-Antipolis Cedex ; France , XP051875202

## Description

### Technical Field

The present invention relates to the field of communications, and in particular, to an encoding method, an encoding apparatus, an encoding device, and a storage medium.

### Background

The 5th-Generation New Radio (5G NR) is a global 5G standard designed based on a new air interface of the Orthogonal Frequency Division Multiplexing (OFDM), and is also a basis of a very important cellular mobile technology. In a 5G NR, particularly in an Ultra Reliable Low Latency Communications (URLC) scenario, a high requirement is imposed on an uplink time sequence, and a time sequence of a shortest distance scenario between Downlink Control Information (DCI) and a Physical Uplink Shared Channel (PUSCH) is very narrow, so that a very high requirement is imposed on a processing rate of a terminal, and if the processing rate is not enough, PUSCH transmission may fail. Patent documents EP3484113A1 and EP1986455A1 provide related technical solutions; however, the above-mentioned problem still remains unsolved.

### Summary

Provided are an encoding method, a terminal device and a storage medium as defined in claims 1, 10 and 11.

### Brief Description of the Drawings

Fig. 1 is a schematic flowchart of an encoding method according to the present invention;
Fig. 1a is a schematic diagram of PUSCH processing by a UE;
Fig. 1b is a schematic diagram of a water flowing process of bit-level channel coding;
Fig. 1c is a schematic diagram of an upstream water-flow packaging process;
Fig. 2 is a schematic structural diagram of an encoding apparatus according to the present invention;
Fig. 3 is a schematic structural diagram of a terminal device according to the present invention.

### Detailed Description of the Embodiments

Embodiments of the present invention will be described hereinafter with reference to the drawings. The embodiments of the present invention and the features in the embodiments can be combined arbitrarily without conflicts.

Steps shown in the flowchart of the figures may be performed in a computer system such as a set of computer executable instructions. Furthermore, although a logic sequence is shown in the flowchart, in some cases, the shown or described steps may be executed in a sequence different from that described here.

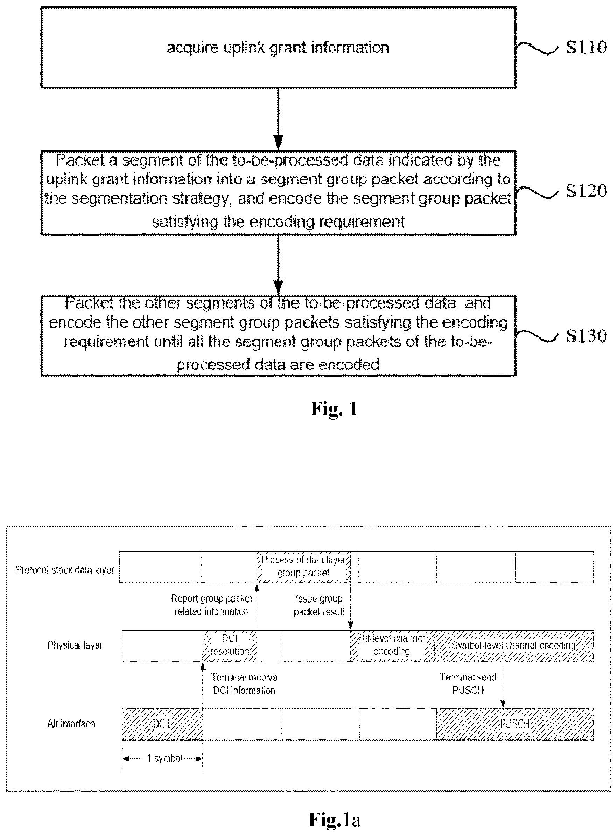

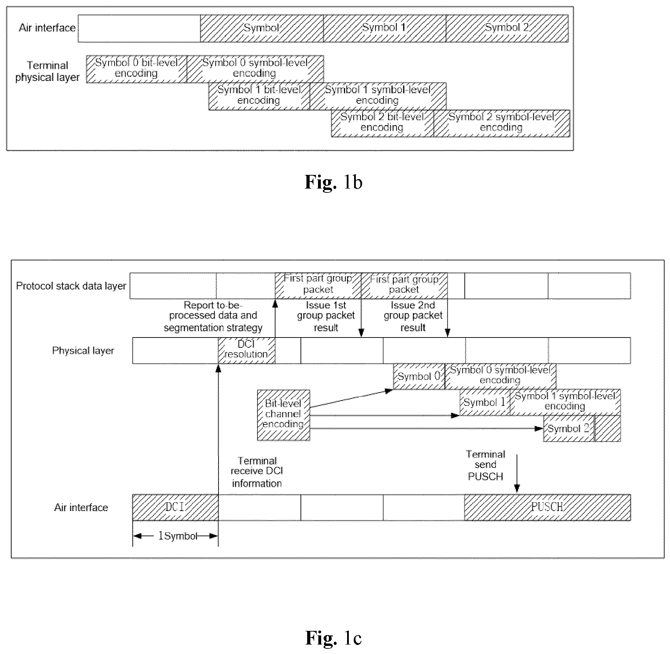

In an exemplary embodiment, Fig. 1 is a schematic flowchart of an encoding method provided by the present invention. The method is applicable to a case that data-layer packet encoding and physical-layer channel encoding are performed in a scenario where a terminal has insufficient uplink processing time sequence. The method may be executed by an encoding device. The encoding device may be implemented by software and/or hardware and integrated in a terminal device. The terminal covers any suitable type of wireless user equipment. For example, the terminal device may be a 5G NR terminal. The timing of uplink processing of a 5G NR terminal may be very short, and the time left for the uplink processing of the terminal in some scenarios is very short; during this period, DCI needs to be detected and analyzed, a data layer group and a physical layer channel are encoded; and if the processing efficiency is not high, the processing is not excessive, resulting in a PUSCH sending failure, and affecting the delay and reliability of the terminal.

As shown in Fig. 1, an encoding method provided in the present invention includes S110, S120, and S130.

S110, obtain uplink grant information.

Uplink grant information includes uplink DCI. The uplink DCI is obtained by blind detection at the physical layer.

S120, packetize, according to a segmentation strategy, segments of to-be-processed data indicated by the uplink grant information, and code segment group packets satisfying a coding requirement.

The segmentation strategy is a preset segmentation strategy, or a segmentation strategy determined according to uplink grant information. In an embodiment, the manner of determining the segmentation strategy according to the UL Grant may be determining the segmentation strategy according to the transmission block size and the transmission position of the PUSCH in the UL Grant. The segmentation strategy may also be determined according to a transport block size and a time sequence tension degree, which is not limited in this embodiment of the present invention.

The to-be-processed data is data on which segment grouping needs to be performed.

In an embodiment, a manner of grouping, according to the segmentation strategy, the to-be-processed data segments indicated by the uplink grant information may be presetting a segmentation strategy, grouping, according to a pre-set segmentation strategy, to-be-processed data indicated by uplink grant information. Alternatively, after the segmentation strategy is determined according to the uplink grant information, the to-be-processed data indicated by the uplink grant information may be grouped according to the segmentation strategy.

In a non-claimed embodiment, the encoding the segmented data packets satisfying the encoding requirement may be encoding a segmented data packet obtained by grouping the current segmentation, for example, the current segmentation is grouped to obtain the current source data, and the current source data is encoded. In a claimed embodiment, the encoding the segmented data packets satisfying the encoding requirements is encoding a plurality of segment group packets completed by the packets, for example, the segment group packets A and B are completed, and then the segment group packets A and B are encoded; this is not limited in the embodiment of the present invention.

In an embodiment, a manner of encoding the segment group packets may be bit-level encoding first, and character-level encoding is performed after the encoding is completed, which is not limited in the embodiment of the present invention.

S130, pack the other segments of the to-be-processed data, and encode the other segment group packets satisfying the encoding requirement until all the segment group packets of the to-be-processed data are encoded.

The other segments of the to-be-processed data refer to segments of the to-be-processed data except segments of the to-be-processed data that have been encoded.

In an embodiment, the other segments of the to-be-processed data are grouped, and the other segment groups satisfying the encoding requirement are encoded until all the segment groups of the to-be-processed data are encoded. For example, the to-be-processed data may include data corresponding to a first part of packets and data corresponding to a second part of packets. The data corresponding to the first part of the packets are packetized to obtain the first part of the packets, and since the first part of the packets already provides channel encoding source data of a physical layer symbol 0. In this case, symbol 0 performs channel coding, and at this time, the protocol stack data layer performs a second part of packet assembling, thereby completing the whole packet assembling process.

In a claimed embodiment, the terminal device packages the other segments of the to-be-processed data while encoding the segment group packets satisfying the encoding requirement. That is to say, the protocol stack data layer adopts the form of segment group packets, and forms flowing water with the channel encoding process of the physical layer, thereby reducing the time sequence pressure in a time sequence scenario, enabling the terminal device to work normally, and increasing the reliability of the NR terminal.

The present invention provides an encoding method. A terminal device detects uplink grant information, and according to a segmentation strategy. Grouping the segments of the to-be-processed data indicated by the uplink grant information, and encoding the segment group packets satisfying an encoding requirement, packing other segments of to-be-processed data, and encoding other segment group packets satisfying an encoding requirement, until all segment group packets of to-be-processed data are completely encoded, the time sequence of uplink processing of a 5G NR terminal is avoided. The problem of failure of the PUSCH caused by low processing efficiency effectively reduces the time sequence pressure and increases the reliability of the NR terminal.

On the basis of the described embodiments, variant embodiments of the described embodiments are proposed, and in order to make the description brief, only differences from the described embodiments will be described in the variant embodiments.

In an embodiment, encoding segment group packets satisfying the encoding requirement includes:
Predefining a coding segmentation strategy; and
performing, according to the encoding segmentation strategy, segmentation encoding on a segment group packet satisfying an encoding requirement.

In an embodiment, a method for determining a coding segmentation strategy may be manually set, and may also be determining, as a coding segmentation, data bearer by each symbol obtained according to uplink control information, where the data is obtained by calculating the size of a transport block, the number of symbols occupied by an uplink shared channel, and the size of a resource block, which is not limited in the embodiment of the present invention.

In a claimed embodiment, encoding segment group packets satisfying the encoding requirement includes:
Before starting a coding operation of each segment, obtaining state information of at least one segment group packet corresponding to the coding operation;
If the at least one segment group packet is in a segment complete state, performing the encoding operation.

There may be one or more segment group packets corresponding to the coding operation, which is not limited in the embodiment of the present invention, for example, a segment group packet A, a segment group packet B and a segment group packet C corresponding to the coding operation.

In an embodiment, the triggering condition for starting the encoding operation is reaching a starting time which is determined according to the sending time of the uplink shared channel.

When the segment group packet corresponding to the coding operation is in the segment complete state by pre-obtaining the state of the segment group packet corresponding to the coding operation. The encoding operation is performed, for example, if the data required for encoding the physical layer symbol 0 is the segment group packet A and the segment group packet B. Thus, the encoding states of the segment group packets A and B are obtained, and no segments can be formed in other segment group packets. Only when the segment group packet A and the segment group packet B are in the segment complete state, symbol 0 performs the channel coding process normally. Using the form of segment group packets to form flowing water with a channel encoding process of a physical layer, thereby reducing the time sequence pressure.

In an embodiment, before the coding operation is started, the obtaining the state information of the at least one segment group packet corresponding to the coding operation includes:
Acquiring sending time of an uplink shared channel according to the uplink grant information;
Determining a start time of a coding operation of each segment according to a sending time of an uplink shared channel and the coding segmentation strategy;
After the startup time is reached and before the encoding operation is started, obtain state information of at least one segment group packet corresponding to the encoding operation.

In an embodiment, before the encoding operation is started, state information of at least one segment group packet corresponding to the encoding operation is obtained, and if the at least one segment group packet is in a segment complete state, the encoding operation is performed. For example, a physical layer determines a starting time according to a PUSCH sending time; after the starting time is reached, a bit-level channel coding process of a PUSCH symbol 0 is started; before the coding process is started, segment group packets corresponding to data required by the symbol 0 are acquired as segment group packet A and segment group packet B; state information about the segment group packet A is acquired as a segmented completing state; and state information about the segment group packet B is acquired as a segmented completing state.

By acquiring state information about at least one segment group packet corresponding to an encoding operation before the encoding operation is started at a physical layer after the starting time is reached, the encoding operation is performed when source data required by the encoding operation can be provided at a protocol stack data layer, thereby reducing the pressure of a time sequence.

In an embodiment, if the at least one segment group packet is in a segment complete state, the performing the encoding operation includes:
If a last segment group packet in the at least one segment group packet is in a segment complete state, performing bit-level encoding on the at least one segment group packet;
Performing symbol-level encoding after the bit-level encoding ends.

In an embodiment, if a last segment group packet of the at least one segment group packet is in a segment complete state, bit-level encoding is performed on the at least one segment group packet; after the bit-level encoding ends, symbol-level encoding is performed. For example, before the encoding process is started. The segment group packets corresponding to the data required by symbol 0 are obtained as segment group packet A, segment group packet B and segment group packet C, Therefore, the state information of the last segment group packet, i.e., the segment group packet C, can be obtained directly, and if the segment group packet C completes the grouping, performing bit-level encoding on the segment group packet A, the segment group packet B and the segment group packet C; performing symbol-level encoding after the bit-level encoding ends.

In an embodiment, before obtaining state information of at least one segment group packet corresponding to the coding operation, the method further includes:
Setting a corresponding flag for each segment group packet;
After a segment of packet is completed, setting a flag bit corresponding to the segment group packet;
If the at least one segment group packet is in the segment complete state, the performing the encoding operation includes:
   If the flag bit corresponding to the at least one segment group packet meets the preset condition, the encoding operation is performed.

The preset condition may be that the flag bit is 0, which indicates that the segment group packet is in an uncompleted state, and the flag bit is 1, which indicates that the segment group packet is in a completed state, and other settings may also be performed according to a use habit, which is not limited in the embodiment of the present invention.

In an embodiment, a flag bit of each segment group packet is set; after a physical layer monitors a DCI and before to-be-processed data is reported to a protocol stack data layer, flag bits of all the segment group packets are cleared; and after the protocol stack data layer completes a segment of packets, the corresponding flag bit of the segment group packets is set.

In an example, each packet fragment is set to correspond to one "flag bit"; after a physical layer monitors uplink grant information, processing the uplink grant information to obtain to-be-processed data; and before a segment of the to-be-processed data is sent to a protocol stack data layer, or before the to-be-processed data and a segmentation strategy are sent to the protocol stack data layer, clearing "flag bits" corresponding to all segment group packets; after the protocol stack data layer completes a segment of segmented packages, setting a "flag bit" of a corresponding segmented package; before the physical layer starts encoding a symbol, firstly determining to which segment group packets the data to be encoded by the symbol belongs (the data of a symbol may belong to a plurality of segment group packets), and using the last segment group packet of the segment group packets as a segment group packet to which the check refers; querying a "flag bit" corresponding to the segment group packet, and if the flag bit is 1, indicating that the data layer of the protocol stack has prepared all the data to be encoded of the present symbol, and a process such as encoding can be started; if the flag bit is 0, it indicates that the data layer of the protocol stack has not completely prepared the data of the symbol, which is an abnormal condition, and the transmission needs to be cancelled.

By setting a flag bit form, the speed of acquiring state information about a segment group packet can be improved, thereby realizing the reduction of a time sequence pressure.

In an embodiment, before the step that the segment of the to-be-processed data specified by the uplink grant information is packetized according to the segmentation strategy, the method further includes:
Acquiring a transport block size and sending position information according to the uplink grant information;
Determining a segmentation strategy according to the transmission block size and the sending position information.

In an embodiment, setting a segmentation strategy according to the tension degree of a time sequence, and also being able to pre-establish a database comprising a transport block size and a correlation between sending position information and the segmentation strategy. A segmentation strategy corresponding to the transmission block size and the transmission location information is obtained by querying a database, which is not limited in the embodiment of the present invention.

Determining a segmentation strategy according to a transport block size and sending position information about a physical uplink shared channel, and being able to set an optimal segmentation strategy according to different situations, thereby realizing the maximum degree of time sequence pressure reduction and improving the reliability of a terminal device.

In an embodiment, determining the segmentation strategy according to the transmission block size and the transmission location information comprises:
Determining, according to the transport block size and the sending position information, whether a time sequence is insufficient;
If the time sequence is insufficient, acquiring a time sequence tension degree;
Determining a segmentation strategy according to the transmission block size and the time sequence tension degree.

A manner of determining whether a time sequence is insufficient may be pre-setting a threshold value, and determining whether the time sequence is insufficient according to a size relationship between a transmission block size and sending position information and the threshold value, where the setting of the threshold value may be set by a user or may also be set by a system, which is not limited in the embodiment of the present invention.

In an embodiment, a manner for acquiring a timing sequence tension degree may be: pre-establishing a database regarding a correlation between a transmission block size and sending position information and the timing sequence tension degree, and acquiring same by querying the database; alternatively, numerical ranges corresponding to different tension degrees may be preset, and the time sequence tension degree is determined according to the transmission block size and the numerical range to which the transmission location information belongs.

In an embodiment, the timing sequence tension may also be obtained directly according to the transmission block size and the transmission location information. Whether the time sequence is insufficient is determined in advance according to the size of the transmission block and the sending position information, so that normal processing can be performed in a case in which the time sequence is not insufficient, thereby reducing unnecessary operations.

In an embodiment, preempting the encoding segmentation strategy comprises:
Determining data bearer by an air interface within a pre-set time as an encoding segment; or
Determining data of a preset size as an encoding segment.

In an embodiment, a pre-set time may be set according to needs, which is not limited in the embodiment of the present invention, and a terminal may use data bearer by an air interface in a period of time as a coding segment to formulate a coding policy; the terminal may also use the fixed data size as a coding segment to formulate a coding policy.

In an embodiment, the determining data bearer on an air interface within a preset time as an encoding segment includes:
According to the uplink grant information, acquiring the size of a transmission block, the number of symbols occupied by an uplink shared channel and the size of a resource block;
Calculating data carried by each symbol according to the size of the transmission block, the number of symbols occupied by the uplink shared channel and the size of the resource block;
Determine data bearer by each symbol as an encoding segment.

In an embodiment, a terminal acquires information, such as a transmission block size, the number of symbols occupied by an uplink shared channel, and a resource block size, according to uplink grant information; the terminal calculates the amount of data bearer by each symbol according to information such as the size of a transmission block, the number of symbols occupied by an uplink shared channel, and the size of a resource block; the terminal uses the amount of data bearer by each symbol as a coding segment, and formulates a coding policy.

The encoding method of the present invention is exemplarily described in the following.

The coding method described in the present invention is applicable to a 5G NR, for example, for a URLC scenario, the requirement for uplink timing is high. The shortest distance between the uplink DCI and the PUSCH is specified in the 38.214 protocol of the 3rd Generation Partnership Project (3GPP) protocol, and the timing of the shortest distance between the uplink DCI and the PUSCH is very narrow. In this way, a very high requirement is put forward for the processing rate of the terminal, and if the processing rate is not high enough, the PUSCH transmission may fail, thereby affecting the delay and reliability of the terminal. In this background, an objective of the embodiments of the present invention is to find a coding method capable of reducing a time sequence pressure and enabling a terminal to work normally in a time sequence scenario, so as to improve reliability of an NR terminal.

During the transmission from the DCI to the PUSCH, the stages involved in the terminal include the detection and resolution of DCI, data layer packet, and physical layer channel coding. The process of processing the terminal is as shown in Fig. 1a, in which after blind detection of the DCI at the physical layer, the DCI content is analyzed, and the package-related information is reported to the data layer of the protocol stack; the protocol stack data layer starts to package according to the package-related information reported by the physical layer, and delivers a package result (namely, Transmission Block) to the physical layer after the package is packaged; the physical layer firstly performs bit-level encoding on the packet result, then performs symbol-level encoding, and sends the encoded data through a PUSCH channel. Bit-level codes of a physical layer comprise Cyclic Redundancy Check (CRC) attachment, Code block (CB) segmentation, Low density parity check (LDPC) codes, rate matching, etc., and an input, a process and an output of the code are all performed in the form of bits; the symbol-level codes of the physical layer comprise scrambling, modulation, pre-coding, frequency-time domain conversion, etc., the input is in the form of bits (namely, the output of the bit-level code), and after the modulation process, both the symbol-level code process and the output are in the form of complex numbers, and data needs to be generated symbol by symbol.

In the embodiment of the present invention, mainly based on the LDPC encoding and rate matching property of the NR, as shown in Fig. 1b, a pipeline form is designed for a data layer packet process and a physical layer bit level encoding, so as to reduce the overall time sequence pressure. The Streaming mechanism may be used in the NR channel coding process because the rate matching process defined in the NR protocol is independent of each CB, and does not include the channel interleaving process between the CBs. Due to the nature of the NR encoding, the bit-level encoding process can be distributed over a plurality of symbols, and each symbol only encodes the data (CB) to be borne by the symbol.

In this way, during channel coding, the physical layer only needs to obtain data bearer by each symbol before each symbol operates. In this way, before channel coding is performed on the physical layer, it is not required that the protocol stack data layer prepares all data, and it is only required that data required by each symbol of the physical layer is prepared before channel coding is performed on the symbol. Therefore, in the case of a long time sequence, the protocol stack data layer may be in the form of segment group packets, and forms a pipeline with the channel encoding process of the physical layer, so that the pressure of the time sequence can be reduced. As shown in Fig. 1c, it is a scene with very low time sequence. When the second part is packed, the physical layer has started to perform the channel coding process. A user equipment (UE) cannot work normally by using a conventional method. However, with this flowing strategy, since the first part of the packets has provided the channel encoding source data of the physical layer symbol 0, the physical layer can normally perform the channel encoding process at the symbol 0, and at this time, the protocol stack data layer can perform the second part of the packets to complete the whole packet assembling process.

In one example, the method includes the following steps. Step 1: a terminal detects an uplink DCI, parses the DCI, and acquires the size of a Transmission Block of a PUSCH and a sending position of the PUSCH; step 2: a terminal judges whether a time sequence is insufficient according to the size of a Transmission Block and a sending position of a PUSCH, and whether a flowing water packet process needs to be triggered, and determines a segmentation strategy of a protocol stack packet process according to the actual size of the Transmission Block and the degree of time sequence tension; step 3: reporting information, such as packet information and a segmentation strategy, to a protocol stack data layer, and starting to perform segmented grouping; step 4: the physical layer starts a bit-level channel coding process of a PUSCH symbol 0 at a specific time according to a PUSCH sending time, and at this time, it only needs to ensure that a protocol stack data layer is ready with data (CB) corresponding to the PUSCH symbol 0, and the protocol stack data layer does not need to complete all packet assembling processes; step 5: the physical layer starts a bit-level channel coding process of the PUSCH symbol 1 at a specific time according to the time of the PUSCH symbol 1, and at this moment, it only needs to ensure that a protocol stack data layer has prepared data (CB) corresponding to the PUSCH symbol 1;... step N: transmission is completed.

The foregoing is only an embodiment of the technical solutions provided in the embodiments of the present invention, and some other changes may also be made according to actual situations and according to the principle, including: for example, for a segment group packet, a physical layer may be used to report to-be-processed data and a segmentation strategy only once, and a protocol stack performs segmentation on its own according to the segmentation strategy; alternatively, time may be controlled by the physical layer, segmented to-be-processed data may be reported for multiple times, and to-be-processed data corresponding to segment group packets of the protocol stack may be reported each time, that is, the segmentation process of the packets is directly controlled by the physical layer. For example, for a segmentation strategy: an adaptive manner may be adopted, and when TB blocks are relatively large and timing sequences are relatively narrow, the TB blocks may be grouped into multiple segments; however, when TB blocks are relatively small and the time sequence is not tight, the packet segmentation can be reduced or not performed; alternatively, a segmentation strategy may be used fixedly, for example, all the transmissions are fixedly divided into two segments to be grouped. For example, a protocol stack group includes a strategy of carrying data to a physical layer: data of a symbol to be encoded can be carried next to the symbol; or carrying data of a plurality of symbols to a physical layer together; (the premise is that the protocol stack has already packaged the data of these symbols, when the symbols are packaged), or the protocol stack may package a segment and then transport the entire segment to the physical layer.

In the embodiments of the present invention, a flowing manner is used, so that the time sequence pressure processed by a terminal in the case where a time sequence is short is greatly reduced, so that the terminal can also process a relatively large amount of data in the case where a processing capability is limited, and at the same time, the system stability of the terminal is also improved, thereby greatly reducing the case where a PUSCH cannot be normally sent because the terminal cannot meet a time sequence requirement.

Since the channel coding process adopts a symbol-by-symbol manner, the required processing data space for the terminal will also be greatly reduced. In a conventional case, the channel encoding execution unit of the terminal must have a data space capable of accommodating the whole Transmission Block. However, according to the solution provided by the embodiment of the present invention, the channel encoding execution unit only needs to have a data space capable of accommodating one symbol data. Generally, the data space cost of the channel encoding execution unit of the terminal is relatively high, and the costs of this part can be reduced to a great extent by using the solutions provided in the embodiments of the present invention.

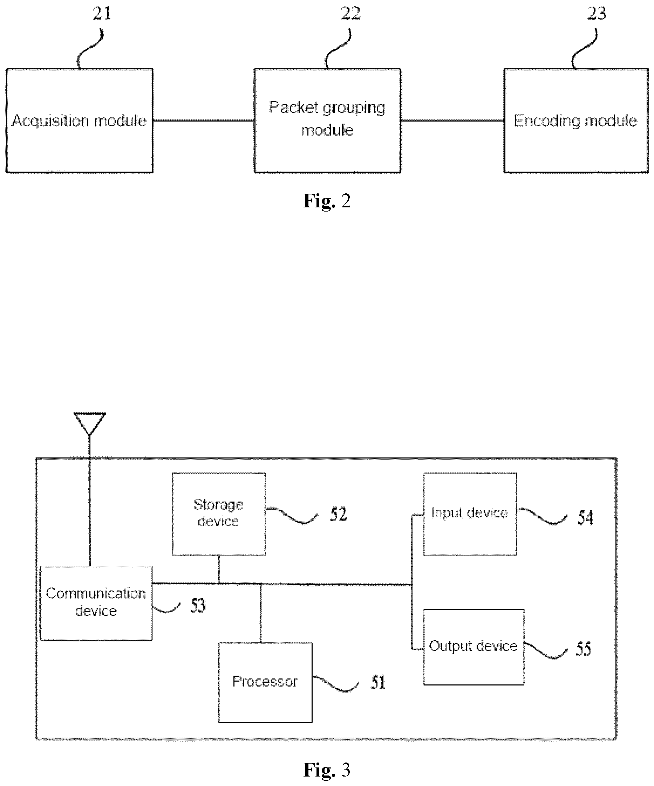

Provided is an encoding device. Fig. 2 is a structural schematic diagram of an encoding device provided in the present invention. The device is configured in a communication device. Referring to Fig. 2, the device comprises the following modules.
An acquisition module 21, configured to acquire uplink grant information;
A grouping module 22, configured to group, according to a segmentation strategy, segments of the to-be-processed data indicated by the uplink grant information, and encode segment group packets satisfying an encoding requirement;
An encoding module 23, configured to assemble the other segments of the to-be-processed data, and encode the other segment group packets satisfying an encoding requirement until all the segment group packets of the to-be-processed data are encoded.

The encoding apparatus provided in this embodiment is configured to implement the encoding method provided in this embodiment. Implementation principles and technical effects of the encoding apparatus provided in this embodiment are similar to those of the encoding method provided in this embodiment, and are not described herein again.

On the basis of the described embodiments, variant embodiments of the described embodiments are proposed, and in order to make the description brief, only differences from the described embodiments will be described in the variant embodiments.

In an embodiment, the grouping module 22 is configured to:
Predefining a coding segmentation strategy;
And performing, according to the encoding segmentation strategy, segmentation encoding on a segment group packet satisfying an encoding requirement.

In an embodiment, the grouping module 22 is configured to:
Before starting a coding operation of each segment, obtaining state information of at least one segment group packet corresponding to the coding operation;
If the at least one segment group packet is in a segment complete state, performing the encoding operation.

In an embodiment, the grouping module 22 performs the encoding operation based on the at least one segment group packet being in a segment complete state, including:
If a last segment group packet in the at least one segment group packet is in a segment complete state, performing bit-level encoding on the at least one segment group packet;
Performing symbol-level encoding after the bit-level encoding ends.

In an embodiment, the step of the packet grouping module 22 acquiring the state information of the at least one segment group packet corresponding to the coding operation based on the state information of the at least one segment group packet corresponding to the coding operation before starting the coding operation includes:
Acquiring sending time of an uplink shared channel according to the uplink grant information;
Determining a start time of a coding operation of each segment according to a sending time of an uplink shared channel and the coding segmentation strategy;
After the startup time is reached and before the encoding operation is started, obtain state information of at least one segment group packet corresponding to the encoding operation.

In an embodiment, the grouping module 22 is further configured to, before acquiring the state information of the at least one segment group packet corresponding to the encoding operation:
Setting a corresponding flag for each segment group packet;
After a segment of packet is completed, setting a flag bit corresponding to the segment group packet;
If the at least one segment group packet is in the segment complete state, the performing the encoding operation includes:
   If the flag bit corresponding to the at least one segment group packet meets the preset condition, the encoding operation is performed.

In an embodiment, further comprising a first determining module.
A first determination module, configured to acquire a transmission block size and transmission position information according to the uplink grant information;
A second determination module, configured to determine a segmentation strategy according to the transmission block size and the transmission location information.

In an embodiment, the second determination module is configured to:
Determining, according to the transport block size and the sending position information, whether a time sequence is insufficient;
If the time sequence is insufficient, acquiring a time sequence tension degree;
Determining a segmentation strategy according to the transmission block size and the time sequence tension degree.

In an embodiment, the grouping module 22 is configured to:
Determining data bearer by an air interface within a pre-set time as an encoding segment;
Alternatively, data of a preset size is determined as one encoding segment.

In an embodiment, the grouping module 22 is configured to:
According to the uplink grant information, acquiring the size of a transmission block, the number of symbols occupied by an uplink shared channel and the size of a resource block;
Calculating data carried by each symbol according to the size of the transmission block, the number of symbols occupied by the uplink shared channel and the size of the resource block;
Determine data bearer by each symbol as an encoding segment.

The present invention provides a coding apparatus, comprising: an acquisition module, a grouping module and a coding module, wherein a terminal device detects uplink grant information. According to a segmentation strategy, segments of to-be-processed data indicated by uplink grant information are packaged, and a segmented package satisfying a coding requirement is encoded, packing other segments of to-be-processed data, and encoding other segment group packets satisfying an encoding requirement, until all segment group packets of to-be-processed data are completely encoded, the time sequence of uplink processing of a 5G NR terminal is avoided. The problem of failure of the PUSCH caused by low processing efficiency effectively reduces the time sequence pressure and increases the reliability of the NR terminal.

Provided is a terminal device. Fig. 3 is a schematic structural diagram of a terminal device provided in the present invention. As shown in Fig. 3, the terminal device provided in the present invention comprises one or more processors 51 and a storage device 52; there may be one or more processors 51 in the terminal device, and one processor 51 is taken as an example in Fig. 3; the storage device 52 is configured to store one or more programs; the one or more programs are executed by the one or more processors 51, so that the one or more processors 51 implement the method shown in Fig. 1 in the embodiment of the present invention.

The terminal device further includes a communication apparatus 53, an input apparatus 54, and an output apparatus 55.

The processor 51, the storage device 52, the communication device 53, the input device 54, and the output device 55 in the terminal device may be connected by using a bus or in another manner, and connection by using a bus is used as an example in Fig. 3.

The input device 54 may be configured to receive input number or character information and generate a key signal input related to user setting and function control of the terminal device. The output device 55 may include a display device such as a display screen.

The communication device 53 may include a receiver and a transmitter. The communication device 53 is configured to perform information transceiving communication according to the control of the processor 51. The information includes uplink grant information.

The storage device 52, as a computer-readable storage medium, may be configured to store a software program, a computer-executable program, and a module, for example, a program instruction/module corresponding to the coding method described in embodiment 1 of the present invention (for example, an acquisition module 21, a grouping module 22, and a coding module 23 in the coding apparatus). The storage device 52 may comprise a program storage area and a data storage area, wherein the program storage area may store an operating system and an application program required by at least one function; the data storage area may store data created according to use of the terminal device, and the like. In addition, the storage device 52 may include a high-speed random access memory, and can further include a non-volatile memory, for example, at least one magnetic disk storage device, a flash memory device, or another non-volatile solid-state storage device. In some examples, storage device 52 may include memory that is remotely located relative to processor 51, which may be connected to a terminal device over a network. Examples of such networks include the Internet, intranets, local area networks, mobile communication networks, and combinations thereof.

Embodiments of the present invention further provide a storage medium. The storage medium stores a computer program. When the computer program is executed by a processor, an encoding method described in the embodiments of the present invention is implemented. The method comprises:
Acquiring uplink grant information;
According to a segmentation strategy, grouping the segments of the to-be-processed data indicated by the uplink grant information, and encoding a segment group packet satisfying an encoding requirement;
Pack other segments of the to-be-processed data, and encode other segment group packets satisfying an encoding requirement until all segment group packets of the to-be-processed data are encoded completely.

The computer storage medium in the embodiment of the present invention may be any combination of one or more computer readable mediums. The computer readable medium may be a computer readable signal medium or a computer readable storage medium. A computer-readable storage medium may be, for example, an electronic, magnetic, optical, electromagnetic, infrared, or semiconductor system, apparatus, or device, or any suitable combination of the foregoing. The computer readable storage medium includes an electrical connection having one or more wires, a portable computer diskette, a hard disk, a Random Access Memory (RAM), a Read Only Memory (ROM), an Erasable Programmable Read Only Memory (EPROM), a Flash memory, an optical fiber, a portable Compact Disc Read Only Memory (CD-ROM), an optical storage device, a magnetic storage device, or any suitable combination of the foregoing. A computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including electro-magnetic signals, optical signals, or any suitable combination thereof. A computer readable signal medium may also be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including wireless, wireline, optical fiber cable, Radio Frequency (RF), etc., or any suitable combination of the foregoing.

Computer program code for carrying out operations for aspects of the present invention may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a Local Area Network (LAN) or a Wide Area Network (WAN), or the connection may be made to an external computer (for example, through the Internet using an Internet Service Provider).

The foregoing descriptions are merely exemplary embodiments of the present invention, but are not intended to limit the scope of protection of the present invention.

A user device encompasses any suitable type of wireless user device, such as a mobile telephone, a portable data processing device, a portable web browser, or an in-vehicle mobile station.

Embodiments of the present invention may be implemented in hardware or special purpose circuits, software, logic, or any combination thereof. For example, some aspects may be implemented in hardware, while other aspects may be implemented in firmware or software that may be executed by a controller, microprocessor or other computing device, although the application is not limited thereto.

Embodiments of the application may be implemented by execution of computer program instructions by a data processor of a mobile device, such as in a processor entity, by hardware, or by a combination of software and hardware. The computer program instructions may be assembly instructions, Instruction Set Architecture (ISA) instructions, machine instructions, machine-related instructions, microcode, firmware instructions, state setting data, or source or object code written in any combination of one or more programming languages.

The block diagrams of any logic flow in the figures of the present invention may represent program steps, or may represent interconnected logic circuits, modules, and functions, or a combination of program steps and logic circuits, modules, and functions. The computer program may be stored on a memory. The memory can be of any type suitable to the local technical environment and can be implemented using any suitable data storage technology, such as Read-Only Memory (ROM), Random Access Memory (RAM), optical memory devices and systems (Digital Video Disc (DVD) or Compact Disk (CD)), etc. Computer-readable media may include non-transitory storage media. The data processors may be of any type suitable to the local technical environment, such as general purpose computers, special purpose computers, microprocessors, Digital Signal Processors (DSPs), Application Specific Integrated Circuits (ASICs), Field-Programmable Gate Arrays (FPGAs), and processors based on a multi-core processor architecture.

## Claims

1. An encoding method, performed by a terminal, comprising:
acquiring (S110) uplink grant information;
grouping (S120) segments of the to-be-processed data indicated by the uplink grant information into segment group packets according to a segmentation strategy, and encoding segment group packets satisfying an encoding requirement, wherein the segmentation strategy comprises one of: a predetermined segmentation strategy, a segmentation strategy determined in accordance with the uplink grant information, wherein the encoding requirement is that the segment group packets are in a segment complete state; and wherein the state of each segment group packet to be encoded is obtained by the terminal before the encoding grouping (S130) other segments of the to-be-processed data into segment group packets while encoding the segment group packets satisfying the encoding requirement, and encode other segment group packets satisfying the encoding requirement until all segment group packets of the to-be-processed data have been encoded.

2. The method according to claim 1, wherein encoding the segment group packets satisfying the encoding requirement comprises:
predefining an encoding segmentation strategy; and
performing, according to the encoding segmentation strategy, segmentation encoding on the segment group packets satisfying the encoding requirement.

3. The method according to claim 2, wherein performing the encoding operation when the segment group packets are in a segment complete state comprises:
performing bit-level encoding on a last segment group packet in the segment group packets when the segment group packets are in the segment complete state; and
performing symbol-level encoding after the bit-level encoding ends.

4. The method according to claim 2, wherein before starting the encoding operation of each segment, obtaining the state of each segment group packet corresponding to the coding operation comprises:
acquiring sending time of an uplink shared channel according to the uplink grant information;
determining start time of the encoding operation of each segment according to the sending time of the uplink shared channel and the coding segmentation strategy; and
after the startup time is reached and before the encoding operation is started, obtain state information of each segment group packet corresponding to the encoding operation.

5. The method according to claim 4, wherein before the obtaining the state of each segment group packet corresponding to the encoding operation, the method further comprises:
setting a corresponding flag for each segment group packet;
after a segment of packet is completed, setting a flag bit of the segment group packet corresponding to the segment of packet;
when the segment group packet is in the segment complete state, the encoding operation performed comprises:
when the flag bit corresponding to the segment group packet meets a preset condition, executing the coding operation.

6. The method according to claim 1, wherein before grouping the segments of the to-be-processed data indicated by the uplink grant information according to the segmentation strategy, the method further comprises:
acquiring a transport block size and sending position information according to the uplink grant information;
determining the segmentation strategy according to the transport block size and the sending position information.

7. The method according to claim 6, wherein the determining the segmentation strategy according to the transport block size and the transmission position information comprises:
determining, according to the transport block size and the sending position information, whether a time sequence is insufficient;
in a case where a time sequence is insufficient, acquiring a time sequence tension degree; determining the segmentation strategy according to the transport block size and the time sequence tension degree.

8. The method according to claim 2, wherein predefining an encoding segmentation strategy comprises:
determining data bearer by an air interface within a pre-set time as an encoding segment; or
determining data of a preset size as an encoding segment.

9. The method according to claim 8, wherein determining data bearer by an air interface within a pre-set time as an encoding segment comprises:
according to the uplink grant information, acquiring the size of a transmission block, the number of symbols occupied by an uplink shared channel and the size of a resource block;
calculating data bearer by each symbol according to the size of the transmission block, the number of symbols occupied by the uplink shared channel and the size of the resource block; determine data bearer by each symbol as an encoding segment.

10. A terminal device, comprising:
one or more processors (51);
a storage device (52), configured to store one or more programs;
when the one or more programs are executed by the one or more processors (51), the one or more processors (51) implement the encoding method according to any one of claims 1 to 9.

11. A storage medium, wherein the storage medium stores a computer program, when the computer program is executed by a processor of a terminal, cause the processor to implement the encoding method as claimed in any one of claims 1-9.

## Patentansprüche

1. Codierungsverfahren, ausgeführt von einem Endgerät, umfassend:
Ermitteln (S110) von Uplink-Zuweisungsinformationen;
Gruppieren (S120) von Segmenten der durch die Uplink-Zuweisungsinformationen angegebenen zu verarbeitenden Daten zu Segmentgruppenpaketen gemäß einer Segmentierungsstrategie und Codieren von Segmentgruppenpaketen, die eine Codierungsanforderung erfüllen, wobei die Segmentierungsstrategie eine der folgenden Strategien umfasst: eine vorbestimmte Segmentierungsstrategie oder eine gemäß den Uplink-Zuweisungsinformationen bestimmte Segmentierungsstrategie, wobei die Codierungsanforderung darin besteht, dass
sich die Segmentgruppenpakete in einem vollständigen Segmentzustand befinden;
und wobei der Zustand jedes zu codierenden Segmentgruppenpakets vor dem Codieren durch das Endgerät ermittelt wird;
Gruppieren (S130) weiterer Segmente der zu verarbeitenden Daten zu Segmentgruppenpaketen während des Codierens der die Codierungsanforderung erfüllenden Segmentgruppenpakete sowie Codieren weiterer die Codierungsanforderung erfüllender Segmentgruppenpakete, bis sämtliche Segmentgruppenpakete der zu verarbeitenden Daten codiert worden sind.

2. Verfahren nach Anspruch 1, wobei das Codieren der die Codierungsanforderung erfüllenden Segmentgruppenpakete umfasst:
Vordefinieren einer Codierungssegmentierungsstrategie; und
Ausführen einer Segmentierungscodierung an den die Codierungsanforderung erfüllenden Segmentgruppenpaketen gemäß der Codierungssegmentierungsstrategie.

3. Verfahren nach Anspruch 2, wobei das Ausführen des Codierungsvorgangs, wenn sich die Segmentgruppenpakete in einem vollständigen Segmentzustand befinden, umfasst:
Ausführen einer Bitebenencodierung an einem letzten Segmentgruppenpaket der Segmentgruppenpakete, wenn sich die Segmentgruppenpakete in dem vollständigen Segmentzustand befinden; und
Ausführen einer Symbolebenencodierung nach Beendigung der Bitebenencodierung.

4. Verfahren nach Anspruch 2, wobei vor dem Starten des Codierungsvorgangs jedes Segments das Ermitteln des Zustands jedes dem Codierungsvorgang entsprechenden Segmentgruppenpakets umfasst:
Ermitteln einer Sendezeit eines gemeinsam genutzten Uplink-Kanals gemäß den Uplink-Zuweisungsinformationen;
Bestimmen einer Startzeit des Codierungsvorgangs jedes Segments gemäß der Sendezeit des gemeinsam genutzten Uplink-Kanals und der Codierungssegmentierungsstrategie; und
nach Erreichen der Startzeit und vor dem Starten des Codierungsvorgangs Ermitteln von Zustandsinformationen jedes dem Codierungsvorgang entsprechenden Segmentgruppenpakets.

5. Verfahren nach Anspruch 4, wobei das Verfahren vor dem Ermitteln des Zustands jedes dem Codierungsvorgang entsprechenden Segmentgruppenpakets ferner umfasst:
Setzen eines entsprechenden Kennzeichens für jedes Segmentgruppenpaket;
nach Abschluss eines Paketsegments Setzen eines Kennzeichnungsbits des dem Paketsegment entsprechenden Segmentgruppenpakets;
wenn sich das Segmentgruppenpaket in dem vollständigen Segmentzustand befindet, umfasst der ausgeführte Codierungsvorgang:
Ausführen des Codierungsvorgangs, wenn das dem Segmentgruppenpaket entsprechende Kennzeichnungsbit eine vorbestimmte Bedingung erfüllt.

6. Verfahren nach Anspruch 1, wobei das Verfahren vor dem Gruppieren der Segmente der durch die Uplink-Zuweisungsinformationen angegebenen zu verarbeitenden Daten gemäß der Segmentierungsstrategie ferner umfasst:
Ermitteln einer Transportblockgröße und von Sendepositionsinformationen gemäß den Uplink-Zuweisungsinformationen;
Bestimmen der Segmentierungsstrategie gemäß der Transportblockgröße und den Sendepositionsinformationen.

7. Verfahren nach Anspruch 6, wobei das Bestimmen der Segmentierungsstrategie gemäß der Transportblockgröße und den Sendepositionsinformationen umfasst:
Bestimmen, gemäß der Transportblockgröße und den Sendepositionsinformationen, ob eine Zeitsequenz unzureichend ist;
im Fall, dass die Zeitsequenz unzureichend ist, Ermitteln eines Anspannungsgrads der Zeitsequenz;
Bestimmen der Segmentierungsstrategie gemäß der Transportblockgröße und dem Anspannungsgrad der Zeitsequenz.

8. Verfahren nach Anspruch 2, wobei das Vordefinieren einer Codierungssegmentierungsstrategie umfasst:
Bestimmen von durch eine Luftschnittstelle innerhalb einer vorbestimmten Zeit getragenen Daten als Codierungssegment; oder
Bestimmen von Daten einer vorbestimmten Größe als Codierungssegment.

9. Verfahren nach Anspruch 8, wobei das Bestimmen von durch eine Luftschnittstelle innerhalb einer vorbestimmten Zeit getragenen Daten als Codierungssegment umfasst:
gemäß den Uplink-Zuweisungsinformationen Ermitteln der Größe eines Transportblocks, der Anzahl von Symbolen, die von einem gemeinsam genutzten Uplink-Kanal belegt werden, und der Größe eines Ressourcenblocks;
Berechnen der von jedem Symbol getragenen Daten gemäß der Größe des Transportblocks, der Anzahl der von dem gemeinsam genutzten Uplink-Kanal belegten Symbole und der Größe des Ressourcenblocks;
Bestimmen der von jedem Symbol getragenen Daten als Codierungssegment.

10. Endgerät, umfassend:
einen oder mehrere Prozessoren (51);
eine Speichereinrichtung (52), die zum Speichern eines oder mehrerer Programme eingerichtet ist;
wobei der oder die Prozessoren (51), wenn das eine oder die mehreren Programme durch den oder die Prozessoren (51) ausgeführt werden, das Codierungsverfahren nach einem der Ansprüche 1 bis 9 implementieren.

11. Speichermedium, wobei das Speichermedium ein Computerprogramm speichert, wobei das Computerprogramm, wenn es durch einen Prozessor eines Endgeräts ausgeführt wird, den Prozessor veranlasst, das Codierungsverfahren nach einem der Ansprüche 1 bis 9 zu implementieren.

## Revendications

1. Procédé de codage, mis en œuvre par un terminal, comprenant :
l'acquisition (S110) d'informations d'autorisation de liaison montante ;
le regroupement (S120) de segments des données à traiter indiquées par les informations d'autorisation de liaison montante en paquets de groupes de segments selon une stratégie de segmentation, et le codage des paquets de groupes de segments satisfaisant à une exigence de codage, la stratégie de segmentation comprenant l'une des stratégies suivantes : une stratégie de segmentation prédéterminée, une stratégie de segmentation déterminée en fonction des informations d'autorisation de liaison montante, l'exigence de codage étant que
les paquets de groupes de segments sont dans un état de segment complet ; et
l'état de chaque paquet de groupe de segments à coder étant obtenu par le terminal avant le codage ;
le regroupement (S130) d'autres segments des données à traiter en paquets de groupes de segments tout en codant les paquets de groupes de segments satisfaisant à l'exigence de codage, et le codage d'autres paquets de groupes de segments satisfaisant à l'exigence de codage jusqu'à ce que tous les paquets de groupes de segments des données à traiter aient été codés.

2. Procédé selon la revendication 1, dans lequel le codage des paquets de groupes de segments satisfaisant à l'exigence de codage comprend :
la prédéfinition d'une stratégie de segmentation de codage ; et
la réalisation, conformément à la stratégie de segmentation de codage, d'un codage par segmentation sur les paquets de groupes de segments satisfaisant à l'exigence de codage.

3. Procédé selon la revendication 2, dans lequel la réalisation de l'opération de codage lorsque les paquets de groupes de segments sont dans un état de segment complet comprend:
la réalisation d'un codage au niveau du bit sur un dernier paquet de groupe de segments parmi les paquets de groupes de segments lorsque les paquets de groupes de segments sont dans l'état de segment complet ; et
la réalisation d'un codage au niveau du symbole après la fin du codage au niveau du bit.

4. Procédé selon la revendication 2, dans lequel, avant de commencer l'opération de codage de chaque segment, l'obtention de l'état de chaque paquet de groupe de segments correspondant à l'opération de codage comprend :
l'acquisition d'un instant d'envoi d'un canal partagé de liaison montante selon les informations d'autorisation de liaison montante ;
la détermination d'un instant de début de l'opération de codage de chaque segment selon l'instant d'envoi du canal partagé de liaison montante et la stratégie de segmentation de codage ; et
après que l'instant de début est atteint et avant que l'opération de codage ne soit commencée, l'obtention des informations d'état de chaque paquet de groupe de segments correspondant à l'opération de codage.

5. Procédé selon la revendication 4, dans lequel, avant l'obtention de l'état de chaque paquet de groupe de segments correspondant à l'opération de codage, le procédé comprend en outre :
la définition d'un indicateur correspondant pour chaque paquet de groupe de segments ;
après qu'un paquet de segments est complété, la définition d'un bit d'indicateur du paquet de groupe de segments correspondant au segment du paquet;
lorsque le paquet de groupe de segments est dans l'état de segment complet, l'opération de codage réalisée comprend :
lorsque le bit d'indicateur correspondant au paquet de groupe de segments satisfait à une condition prédéfinie, l'exécution de l'opération de codage.

6. Procédé selon la revendication 1, dans lequel, avant de regrouper les segments des données à traiter indiquées par les informations d'autorisation de liaison montante selon la stratégie de segmentation, le procédé comprend en outre :
l'acquisition d'une taille de bloc de transport et d'informations de position d'envoi selon les informations d'autorisation de liaison montante ;
la détermination de la stratégie de segmentation selon la taille du bloc de transport et les informations de position d'envoi.

7. Procédé selon la revendication 6, dans lequel la détermination de la stratégie de segmentation selon la taille du bloc de transport et les informations de position d'envoi comprend :
la détermination, selon la taille du bloc de transport et les informations de position d'envoi, de l'insuffisance ou non d'une séquence temporelle ;
dans le cas où la séquence temporelle est insuffisante, l'acquisition d'un degré de tension de la séquence temporelle ;
la détermination de la stratégie de segmentation selon la taille du bloc de transport et le degré de tension de la séquence temporelle.

8. Procédé selon la revendication 2, dans lequel la prédéfinition d'une stratégie de segmentation de codage comprend :
la détermination de données porteuses par une interface radio dans un temps prédéfini en tant que segment de codage ; ou
la détermination de données d'une taille prédéfinie en tant que segment de codage.

9. Procédé selon la revendication 8, dans lequel la détermination de données porteuses par une interface radio dans un temps prédéfini en tant que segment de codage comprend :
selon les informations d'autorisation de liaison montante, l'acquisition de la taille d'un bloc de transmission, du nombre de symboles occupés par un canal partagé de liaison montante et de la taille d'un bloc de ressources ;
le calcul des données porteuses par symbole selon la taille du bloc de transmission, le nombre de symboles occupés par le canal partagé de liaison montante et la taille du bloc de ressources ;
la détermination des données porteuses par symbole en tant que segment de codage.

10. Dispositif terminal, comprenant :
un ou plusieurs processeurs (51) ;
un dispositif de stockage (52), configuré pour stocker un ou plusieurs programmes ;
lorsque le ou les programmes sont exécutés par le ou les processeurs (51), le ou les processeurs (51) mettent en œuvre le procédé de codage selon l'une quelconque des revendications 1 à 9.

11. Support de stockage, dans lequel le support de stockage stocke un programme d'ordinateur, lorsque le programme d'ordinateur est exécuté par un processeur d'un terminal, il amène le processeur à mettre en œuvre le procédé de codage selon l'une quelconque des revendications 1 à 9.
